# EUROPÄISCHE PATENTSCHRIFT

(11) **EP 3 289 234 B1**
(45) Veröffentlichungstag und Bekanntmachung des Hinweises auf die Patenterteilung: **20.03.2019**
(21) Anmeldenummer: 16726108.0
(22) Anmeldetag: 01.06.2016
(51) Int. Cl.: F16C 32/04, B63H 5/125

(54) **FAHRMASCHINE FÜR EIN GEWÄSSER MIT EINER AZIMUTLAGERUNG**
PROPULSIVE MACHINE FOR A BODY OF WATER HAVING AN AZIMUTH BEARING
MACHINE PROPULSIVE POUR UN ESPACE D'EAU, COMPRENANT UN MONTAGE AZIMUTAL

(30) Priorität: 03.07.2015 DE 102015212500
(43) Veröffentlichungstag der Anmeldung: 07.03.2018
(73) Patentinhaber: Siemens Aktiengesellschaft, 80333 München (DE)
(72) Erfinder: ARNOLDT, Jens, 22177 Hamburg (DE); DEEG, Markus, 21680 Stade (DE); GRAEFF, Sven-Olaf, 23968 Wismar (DE); HELLEMANN, Oscar, 21629 Neu Wulmstorf (DE); STUTZ, Sophie Juliane, 22111 Hamburg (DE)
(86) Internationale Anmeldenummer: PCT/EP2016/062323
(87) Internationale Veröffentlichungsnummer: WO 2017/005415

(56) Entgegenhaltungen:
- WO-A1-00/37308
- WO-A1-2009/127774
- DE-A1-102012 207 748
- JP-A- 2004 142 700
- JP-A- 2006 069 369

## Beschreibung

Die Erfindung betrifft eine Fahrmaschine für ein Gewässer mit einer Azimutlagerung. Eine Azimutlagerung weist zumindest ein Azimutlager auf. Die Azimutlagerung ist beispielsweise bei Pod-Antrieben (auch Gondelantrieb genannt) vorhanden, damit der Propeller des Antriebs als eine Art Ruder und/oder Manövrierorgan einsetzbar ist. Für die Azimutlagerung von azimutierenden Antrieben für Wasserfahrzeuge können verschiedene Wälzlageranordnungen und -ausführungen verwendet werden. Beispiele für Fahrmaschine für ein Gewässern sind Containerschiffe, Passagierschiffe, Pod-Antriebe, Ruderpropeller, Frachter, U-Boote, etc. Gewässer sind beispielsweise Merre, Flüsse, Seen, usw. Derartige Fahrmaschine für ein Gewässern, also insbesondere U-Boote, Schiffe und Boote sind mittels eines Propellers (oder einer Vielzahl von Propellern) antreibbar, wobei der Propeller mit einer Antriebswelle mechanisch gekoppelt ist. Unter einer Fahrmaschine für ein Gewässer kann also ein Schwimmkörper, wie ein Schiff oder ein U-Boot, wie auch ein Teil davon verstanden werden. Dies ist beispielsweise eine Antriebsgondel (Pod-Antrieb).

Die EP 1 972 545 A1 zeigt beispielsweise eine Fahrmaschine für ein Gewässer, die als Pod-Antrieb für ein Schiff dient. Die Fahrmaschine für ein Gewässer weist insbesondere ein Unterwassergehäuse, das an dem Rumpf des Schiffes angeordnet ist, einen Propeller, der außerhalb des Gehäuses angeordnet ist, und eine Propellerwelle (also eine Antriebswelle), auf der der Propeller sitzt auf. Die Propellerwelle ist in dem Gehäuse gelagert. Das Gehäuse weist eine oder eine Vielzhal von Durchtrittsöffnungen auf, über die die Propellerwelle aus dem Gehäuse heraus geführt ist. Innerhalb des Gehäuses ist beispielsweise ein Getriebe in Form eines Planetengetriebes angeordnet, das mit der Propellerwelle gekoppelt ist und ein Getriebegehäuse aufweist. Der Propeller kann auch direkt, also ohne Getriebe, angetrieben sein. Eine Wellendichtung dichtet die Durchtrittsöffnung gegen einen Eintritt von Flüssigkeit in das Gehäuse ab. Das Getriebe ist dabei insbesondere von der Wellendichtung beabstandet. Der Antrieb der Propellerwelle bzw. des Propellers über das Getriebe erfolgt durch eine Antriebsmotoreneinrichtung, die beispielsweise einen elektrischen Motor enthält. Auch ein Direktantrieb ohne Getriebe ist möglich. Dieser elektrische Motor ist bei einem Pod-Antrieb im Inneren des Gehäuses angeordnet. Ist der elektrische Motor außerhalb des Gehäuses im Schiffsrumpf angeordnet, so handelt es sich um einen Ruderpropeller. Bei einer Anordnung im Schiffsrumpf erfolgt der Antrieb der Propellerwelle bzw. des Propellers über eine Vertikalwelle, die von dem Schiffsrumpf in das Gehäuse geführt ist, und einem zwischen dem Getriebe und der Vertikalwelle angeordneten Tellerrad-Kegelrad-Getriebe. Ausführungen ohne Getriebe sind auch möglich.

Die Propellerwellenlagerung, also die Lagerung der Antriebswelle für eine Fahrmaschine für ein Gewässer wie ein Wasserfahrzeug, beispielsweise für einen azimutierenden elektrischen Antrieb, sowie die Azimutlagerung selbst ist durch verschiedene Wälzlager, Gleitlager und/oder WälzGleitlageranordnungen und -ausführungen ausgestaltbar.

JP 2006 069369 offenbart eine Fahrmaschine für ein Gewässer mit einem Antriebsgehäuse, wobei das Antriebsgehäuse mittels eines zumindest ein Magnetlager aufweisenden Lagers drehbar gelagert ist, wobei die Lagerung ein axiales Lager aufweist, wobei das axiale Lager das Magnetlager ist.

Eine Aufgabe der Erfindung ist es die Lagerung bei einer Fahrmaschine für ein Gewässer zu verbessern. Durch eine verbesserte Lagerung lässt sich z.B. die Effizienz verbessern und/oder die Verlässlichkeit und/oder die Betriebsstundenzahl und/oder die Wartungsintervalle.

Eine Lösung der Aufgabe ergibt sich bei einer Fahrmaschine für ein Gewässer nach Anspruch 1. Ausgestaltungen der Fahrmaschine für ein Gewässer ergeben sich nach den Ansprüchen 2 bis 17.

Eine Fahrmaschine für ein Gewässer weist ein Antriebsgehäuse auf. Das Antriebsgehäuse ist beispielsweise ein Teil eines Gondelantriebes (auch Pod-Antrieb genannt). Das Antriebsgehäuse ist mittels eines Magnetlagers drehbar gelagert. Die drehbare Lagerung betrifft insbesondere eine Azimutlagerung. Bei einem Pod-Antrieb ist der Pod (die Gondel) mittels des Magnetlagers gegenüber einem Rumpf drehbar gelagert. Bei einem Ruderpropeller ist dieser mittels des Magnetlagers gegenüber einem Rumpf drehbar gelagert. Der Rumpf ist beispielsweise der eines Schiffes, Bootes, Tankers, U-Bootes, Barke, usw.

Die Fahrmaschine für ein Gewässer, kurz Fahrmaschine, kann einen oder ein Vielzahl von Propellern aufweisen. Die Fahrmaschine kann auch eine oder eine Vielzahl von Wellen aufweisen.

Die Azimutlagerung von sogenannten azimutierenden Antrieben für Wasserfahrzeuge soll durch eine magnetische Lagerung, z.B. mittels Supraleiter, ausgeführt werden. Dabei können sowohl die Radiallagerung als auch die Axiallagerung des Azimutlagers als Magnetlager ausgeführt sein. Es sind aber auch Kombinationen von Wälzlagern (Radiallager oder Axiallager) mit Magnetlagern (Axiallager oder Radiallager) möglich. Insbesondere sind auch Kombinationen von mehreren Radiallagern in ausschließlicher magnetischer Ausführung oder Kombinationen von Radiallagern in Wälzlager- und Magnetlagerausführung möglich.

Ein Vorteil der magnetischen Ausführung der Lager kann darin gesehen werden, dass diese verschleißfrei oder zumindest verschleißarm sind. Eine Verschleißfreiheit ist bei Wälzlagern beispielsweise nicht gegeben. Zudem ergibt sich die Möglichkeit die Lager je nach Erfordernissen des Betriebes des Wasserfahrzeuges in ihrer Lagerwirkung zu verstärken (z.B. durch die Hinzuschaltung weiterer Magnetlager).

In einer Ausgestaltung der Fahrmaschine für ein Gewässer weist diese also z.B. eine Vielzahl von Magnetlagern auf, wobei zumindest zwei Magnetlager derart angeordnet sind, dass diese gleiche bzw. ähnliche Kräfte (z.B. radiale Kräfte und/oder axiale Kräfte) aufnehmen können, wobei abhängig von der Größe der Kräfte ein Magnetlager abgeschaltet werden kann oder auch zugeschaltet werden kann. Erhöht sich beispielsweise die Kraft, die auf ein Magnetlager wirkt über einen für dieses Magnetlager zulässigen Wert, so kann ein zweites Magnetlager oder eine Vielzahl weiterer Magnetlager zugeschaltet werden, so dass dann diese Magnetlager die Kräfte aufnehmen. Die Kräfte sind dann also auf die eingeschalteten (aktiven) Magnetlager verteilt.

Durch die Verwendung eines Magnetlagers kann ein reibungsarmer Betrieb erzielt werden, der sich leistungsreduzierend auf einen oder mehrere Azimutantriebe auswirkt. Der oder die Azimutantriebe sind dafür vorgesehen das Antriebsgehäuse bzw. den Pod des Pod-Antriebes zu drehen. Bei einem Magnetlager werden keine Schmiermedien für die Lagerung benötigt. Das Magnetlager kann auch derart ausgebildet sein, dass dieses auch als Motor betreibbar ist. Der Azimutantrieb ist dann in das Magnetlager integriert.

Durch den Einsatz eines Magnetlagers kann auch eine Entkopplung der Schwingungen der azimutierenden Einheit, also des Pods bzw. des Antriebsgehäuses zusammen mit dem Propeller erreicht werden. Hierbei hilft eine aktive magnetische Lagerung, bei welcher gezielt unterschiedliche Wicklungen des Magnetlagers angesteuert werden können. Unterschiedlichen Wicklungen sind unterschiedliche Stromrichter zugeordnet.

In einer Ausgestaltung der Fahrmaschine für ein Gewässer weist ein Pod-Antrieb das Antriebsgehäuse und einen Propeller auf wobei die magnetische Lagerung die Azimutlagerung betrifft. Nicht nur die Azimutlagerung ist als Magnetlager ausführbar sondern beispielsweise auch die Lagerung der Welle an welche ein Propeller mechanisch gekoppelt ist und welche durch eine elektrische Maschine im Antriebsgehäuse angetrieben werden kann.

In einer Ausgestaltung der Fahrmaschine für ein Gewässer weist die Azimutlagerung ein axiales Lager und ein radiales Lager auf. Durch diese unterschiedlichen Lagertypen lassen sich unterschiedliche Kräfte aufnehmen. Derartige Kräfte ergeben sich beispielsweise durch die Gewichtskraft von Antriebsgehäuse, Welle, Propeller, usw. Weitere Kräfte ergeben sich beispielsweise durch den vom Propeller erzeugbaren Schub, wenn sich die Fahrmaschine für ein Gewässer im Wasser fortbewegt. Durch die rotierende Bewegung von z.B. Propeller, Welle und elektrischer Antriebsmaschine für den Antrieb der Welle des Propellers ergeben sich auch Drehmomente, welche aufzunehmen sind.

In einer Ausgestaltung der Fahrmaschine für ein Gewässer ist das axiale Lager ein Magnetlager. In einer weiteren Ausgestaltung der Fahrmaschine für ein Gewässer ist das radiale Lager ein Wälzlager. Dies betrifft jeweils die Azimutlagerung. In weiteren Ausgestaltungen der Fahrmaschine für ein Gewässer sind axiales Lager und radiales Lager der Azimutlagerung Magnetlager. Dort eingesetzte Magnetlager sind prinzipiell derart ausgestaltbar, dass diese auch ein Fanglager aufweisen können. Ein Fanglager ist insbesondere dann hilfreich, wenn im Fehlerfall beim Magnetlager eine Notlaufeigenschaft vorhanden sein soll.

In einer Ausgestaltung der Fahrmaschine für ein Gewässer ist bei der Azimutlagerung eine Mischung aus einem Magnetlager und einem mechanischen Lager vorhanden. So kann beispielsweise das radiale Lager ein Magnetlager sein und das axiale Lager ein mechanisches Lager und umgekehrt. Beispiele für mechanische Lager sind Kugellager, Tonnenlager, Gleitlager, usw.

Eine Fahrmaschine für ein Gewässer, wie z.B. ein Containerschiff, ein Passagierschiffe, ein Pod-Antrieb, ein Frachter, ein U-Boot, ein Kompressor, weist einen Propeller und einer Welle auf. Die Welle ist insbesondere eine Antriebswelle, welche direkt oder indirekt mittels eines Getriebes eine elektrische Maschine, wie z.B. einen elektrischen Motor oder einen elektrischen Generator, mit dem Propeller koppelt. Die Kopplung ist insbesondere mechanisch, wobei die Welle insbesondere innerhalb eines Gehäuses, wie z.B. einer Gondel unterhalb eines Schiffsrumpfes (Pod-Antrieb), gelagert ist. Auch das Lager zur Lagerung der Welle ist als Magnetlager ausführbar. Die Vorteile eines Magnetlagers können also bei der Wellenlagerung wie auch bei der Azimutlagerung genutzt werden.

In einer Ausgestaltung der Fahrmaschine für ein Gewässer ergibt sich die Möglichkeit das Lager bzw. die Lager abhängig von den Erfordernissen, insbesondere des Betriebes eines Wasserfahrzeuges (Schiff, U-Boot, etc.), in ihrer Lagerwirkung zu verstärken, was insbesondere durch eine Hinzuschaltung weiterer Magnetlager möglich ist. So kann abhängig von der Belastung (insbesondere der Welle) ein Magnetlager aktiv sein oder eine Vielzahl von Magnetlagern. Zudem ist es auch möglich ein Magnetlager abhängig von der Belastung mit unterschiedlichen Stromstärken und/oder Spannungen zu bestromen.

Durch die Verwendung eines Magnetlagers ist auch ein reibungsarmer Betrieb der Lagerung der Welle möglich. Der reibungsärmere Betrieb wirkt sich verlustreduzierend aus. Zudem ist es möglich die abzuführende Lagerverlustwärme zu reduzieren.

Das Magnetlager ist derart ausbildbar, dass keine Schmiermedien für die Lagerung benötigt werden, wodurch keine Schmiermedien in die Umwelt gelangen können. Gegebenenfalls ist es angezeigt für ein Fanglager ein Schmiermedium wie ein Fett oder ein Öl zu verwenden.

Bei dem Magnetlager kann es auch vorteilhaft sein, dass durch dessen Einsatz und die daraus resultierende magnetische Lagerung geringere Vibrationen auftreten.

In einer Ausgestaltung des Magnetlagers ist es ein aktives magnetisches Lager. Bei dem aktiven magnetischen Lager ist es möglich die Bestromung der Wicklungen des Magnetlagers zu regeln. Mittels des aktiven magnetischen Lagers kann beispielsweise eine Entkopplung der Schwingungen der Welle, insbesondere der Antriebswelle, also insbesondere der Propellerwelle, erreicht werden. An der Propellerwelle ist der Propeller mechanisch steif angekoppelt.

In einer Ausgestaltung der Fahrmaschine für ein Gewässer weist diese zur Lagerung der Welle zumindest ein Magnetlager und zumindest ein mechanisches Lager auf. Das mechanische Lager ist beispielsweise ein Kugellager, ein Tonnenlager, ein Nadellager, etc. Durch die Verwendung zweier Lagertypen (mechanisches Lager und Magnetlager) ist es möglich deren jeweilige Vorteile zu kombinieren. Vorteile bzw. Nachteile können beispielsweise in folgenden Bereichen liegen: Preis, Platzbedarf, Belastbarkeit, Temperaturbeständigkeit, Notlaufeigenschaften, Lebensdauer, Lagerströme, usw.

In einer Ausgestaltung der Fahrmaschine für ein Gewässer weist diese zur Lagerung der Welle ein erstes Lager und ein zweites Lager auf. Damit kann beispielsweise hohen Belastungen und/oder unterschiedlichen Belastungen Rechnung getragen werden.

In einer Ausgestaltung der Fahrmaschine für ein Gewässer ist das erste Lager ausgeführt um Axialkräfte aufzunehmen. Das erste Lager ist folglich befähigt größere Axialkräfte als Radialkräfte aufzunehmen. Dabei richtet sich die Orientierung der Kräfte in axialer Richtung bzw. in radialer Richtung nach der Welle.

In einer Ausgestaltung der Fahrmaschine für ein Gewässer ist das zweite Lager ausgeführt um Radialkräfte aufzunehmen. Das zweite Lager ist folglich befähigt größere Radialkräfte als Axialkräfte aufzunehmen. Auch dabei richtet sich die Orientierung der Kräfte in axialer Richtung bzw. in radialer Richtung nach der Welle.

Durch eine Kombination von Lagern, welche durch ihren unterschiedlichen Aufbau überwiegend Axial- und/oder Radialkräfte aufnehmen können, kann eine für den jeweiligen Anwendungsfall optimierte Lagerkombination erreicht werden. Auch eine Kombination von drei oder mehr Lagern ist möglich.

Auch eine Propellerwellenlagerung von azimutierenden elektrischen Antrieben für Wasserfahrzeuge (Pod-Antrieb) ist durch eine magnetische Lagerung optimierbar. Dies gelingt beispielsweise auch durch den Einsatz von Supraleitern. Ein mit Supraleiter ausgeführtes Magnetlager kann besonders hohe Kräfte aufnehmen und ermöglicht auch einen kompakten Aufbau. Azimutierende elektrische Antriebe sind bei Fahrmaschine für ein Gewässern mit einer Antriebseinrichtung für eine schwimmende oder tauchende Einrichtung, wie z.B. ein Schiff oder eine Offshore-Plattform einsetzbar, wobei die Fahrmaschine für ein Gewässer, insbesondere horizontal und/oder vertikal bzw. um ihre räumlich freie Drehachse/-n drehbar, an einem Rumpf der schwimmenden oder tauchenden Einrichtung befestigt ist.

Bei dem azimutierenden elektrischen Antrieb kann sowohl die Radiallagerung als auch die Axiallagerung der Propellerwelle und/oder des Motors als Magnetlager ausgeführt sein. Es sind aber auch Kombinationen von Wälzlagern (Radiallager oder Axiallager) mit Magnetlagern (Axiallager oder Radiallager) möglich.

In einer Ausgestaltung der Fahrmaschine für ein Gewässer weist ein Getriebe zumindest ein Magnetlager auf. Mittels des Getriebes ist der Propeller mit dem Antrieb (z.B. eine elektrische Maschine) gekoppelt. Das Getriebe ist derart ausbildbar, dass beim Betrieb der Fahrmaschine für ein Gewässer die Drehzahl der elektrischen Maschine größer ist als die Drehzahl der Propellerwelle (z.B. 4- bis 5-faches der Propellerdrehzahl). Als elektrische Maschine kann dann eine schnell laufende Maschine eingesetzt werden, die kleinere Abmessungen als eine mit der Propellerdrehzahl laufende Maschine hat. Dies gilt insbesondere bei einer Verwendung der Fahrmaschine für ein Gewässer als eine Antriebseinrichtung für eine schwimmende oder tauchende Einrichtung wie ein Unterseeboot (U-Boot). Die elektrische Maschine kann dabei als ein elektrischer Motor ausgebildet sein, der den Propeller antreibt. Als elektrische Motoren sind unterschiedlichste Elektromotoren wie z.B. Asynchron oder Synchronmotoren möglich, die durch Permanentmagnete oder ein Wicklungssystem erregt sein können, wobei diese auch in HTS (Hochtemperatur-Supraleiter)-Technik ausgeführt sein können. Die elektrische Maschine kann aber auch als ein Generator ausgebildet sein, der von dem Propeller angetrieben wird.

In einer Ausgestaltung der Fahrmaschine für ein Gewässer ist die Welle mit einer elektrischen Maschine gekoppelt. Elektrische Maschinen sind im Vergleich zu Verbrennungskraftmaschinen wie einem Dieselmotor einfacher und exakter regelbar.

In einer Ausgestaltung der Fahrmaschine für ein Gewässer ist das Getriebe mit der elektrischen Maschine gekoppelt. Dabei kann das Magnetlager Kräfte aufnehmen, welche von dem Getriebe und/oder von der elektrischen Maschine herrühren.

In einer Ausgestaltung der Fahrmaschine für ein Gewässer sind das Magnetlager und/oder ein Stromrichter des Magnetlagers gekühlt. Mittels des oder der Stromrichter sind Spulen des Magnetlagers bestrombar. Zur Steigerung der Effizienz kann einzeln oder in Kombination eine Kühlung von Stromrichter und Magnetlager vorgesehen sein.

In einer Ausgestaltung der Fahrmaschine für ein Gewässer ist die Kühlung des Magnetlagers und/oder ein Stromrichter des Magnetlagers thermisch mit der Kühlung der elektrischen Maschine und/oder mit der Kühlung des Stromrichters für die elektrische Maschine gekoppelt. Durch gemeinsame Kühlkreisläufe kann der von der Kühlung beanspruchte Bauraum reduziert werden.

In einer Ausgestaltung der Fahrmaschine für ein Gewässer weist das Magnetlager einen Supraleiter auf. Weist auch die elektrische Maschine einen Supraleiter auf, so kann durch eine gemeinsame Kühlung der Supraleiter von elektrischer Maschine und Magnetlager eine effiziente Kühlung realisiert werden.

In einer Ausgestaltung der Fahrmaschine für ein Gewässer befindet sich die elektrische Maschine und das Magnetlager in einem Gehäuse, wobei das Gehäuse einen Gondelantrieb betrifft. Der Gondelantrieb ist als eine azimutierende elektrische Antriebseinheit ausbildbar.

In einer Ausgestaltung der Fahrmaschine für ein Gewässer ist das Gehäuse in welchem sich die elektrische Maschine und das Magnetlager befinden ein Druckkörper, wie dieser bei Unterseebooten benötigt wird.

Die Erfindung sowie weitere Ausgestaltungen der Erfindung werden im Folgenden anhand von Ausführungsbeispielen in den Figuren näher erläutert; dabei zeigt:
- FIG 1: eine Azimutlagerung;
- FIG 2: eine Azimutlagerung mit einem axialen Magnetlager und einem radialen Magnetlager;
- FIG 3: eine Azimutlagerung mit einem axialen Wälzlager und einem radialen Magnetlager;
- FIG 4: eine Azimutlagerung mit einem axialen Magnetlager und einem radialen Wälzlager;
- FIG 5: eine Fahrmaschine für ein Gewässer mit einer magnetisch gelagerten Welle;
- FIG 6: eine Fahrmaschine für ein Gewässer mit einem gekühlten magnetischen Lager;
- FIG 7: eine Fahrmaschine für ein Gewässer mit drei Lager zur Lagerung einer Welle;
- FIG 8: ein Magnetlager in einem Antriebsgehäuse;
- FIG 9: ein Magnetlager für eine Welle;
- FIG 10: eine erste Kombination von Lagern für eine Welle;
- FIG 11: eine zweite Kombination von Lagern für eine Welle; und
- FIG 12: eine dritte Kombination von Lagern für eine Welle.

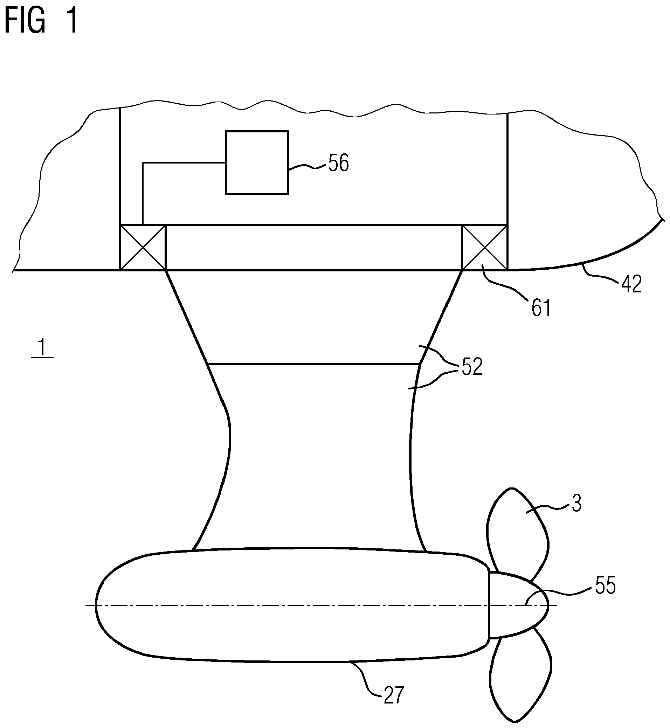

FIG 1 zeigt einen Podantrieb (auch Ruderpropeller genannt) mit einem Antriebsgehäuse 27, einem Propeller 3 und einem Schaft 52, welche einem Schiffsrumpf 42 zugeordnet sind. Mittels einer Azimutlagerung 61 ist das Antriebsgehäuse 27 und der Propeller 3 über den Schaft 52 azimutal drehbar. Die Azimutlagerung 61 ist beispielsweise eine Kombination aus Radiallager, Axiallager, Magnetlager und/oder Wälzlager. Das Azimutlager 61 weist zumindest ein Magnetlager auf, wobei dieses mittels eines Stromrichters 56 bestrombar ist.

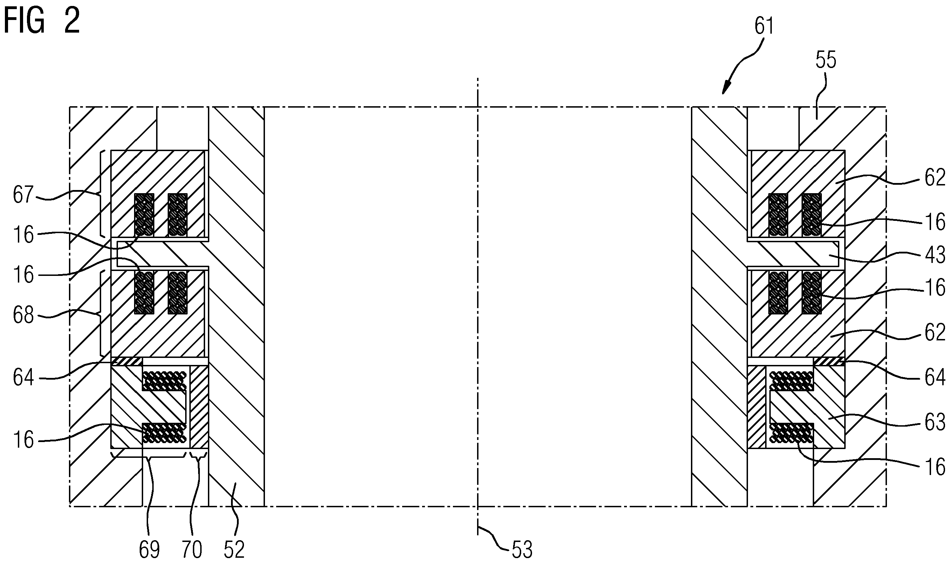

Die Darstellung nach Figur 2 zeigt als Azimutlager 61 ein Axial-Magnetlager (axiales Magnetlager) 62 mit Magnetlagerspulen 16 und ein Radial-Magnetlager (radiales Magnetlager) 63 auch mit Magnetlagerspulen 16. Das Axial-Magnetlager 62 weist ein Element 43 auf, welches als Passivteil des Magnetlagers dient. Das Radial-Magnetlager 63 weist auch ein Passivteil 70 auf, wobei wie beim Axial-Magnetlager 62 das Aktivteil 69 die Magnetlagerspulen 16 aufweist. Die Passivteile 70 und 43 sind einteilig und/oder drehfest mit einem Schaft 52 des Pod-Antriebes verbunden, welcher einer Drehachse 53 aufweist. Das Aktivteil des Axialen-Magnetlagers 62 weist ein oberes Aktivteil 67 und ein unteres Aktivteil 68 auf, wobei das untere Aktivteil 68 vom Aktivteil 69 des radialen Magnetlagers durch ein Abstandselement 64 beabstandet ist. Das Abstandselement 64 wirkt insbesondere elektrisch isolierend und/oder mechanisch Schwingungsdämpfend. Natürlich sind auch Ausführungsvarianten möglich, bei welchen "umgekehrte" Variationen realisiert sind. Diese sind in der Figur 2 jedoch nicht dargestellt.

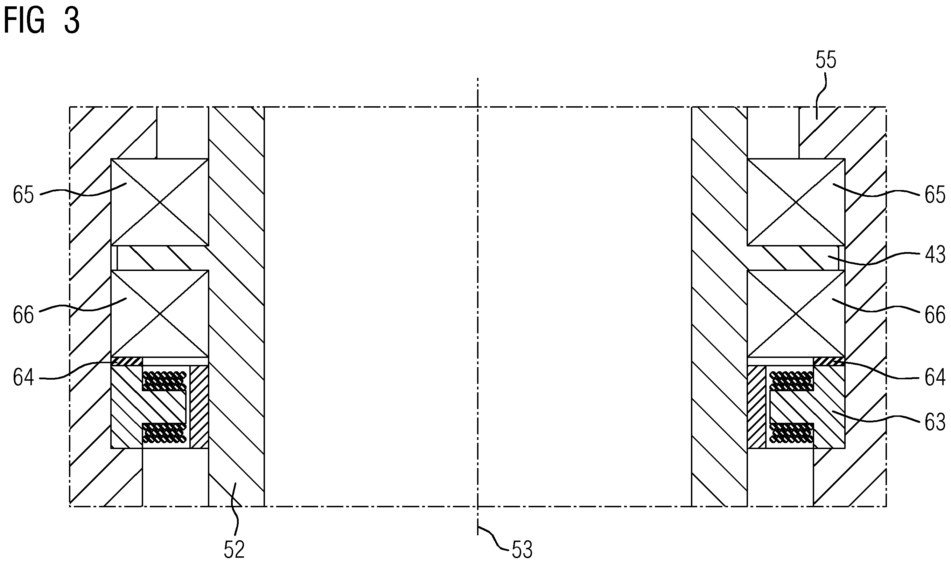

Die Darstellung nach Figur 3 zeigt als Azimutlager 61 ein Axial-Wälzlager 65, 66 und ein Radial-Magnetlager 63 ähnlich dem nach Figur 2. Das Axiallager weist ein erstes axiales Wälzlager 65 und ein zweites axiales Wälzlager 66 auf welches durch das Abstandselement 64 vom Magnetlager 63 getrennt ist. Nach Figur 3 ist also die in Figur 2 magnetische axiale Lagerung durch eine mechanische axiale Lagerung ersetzt worden.

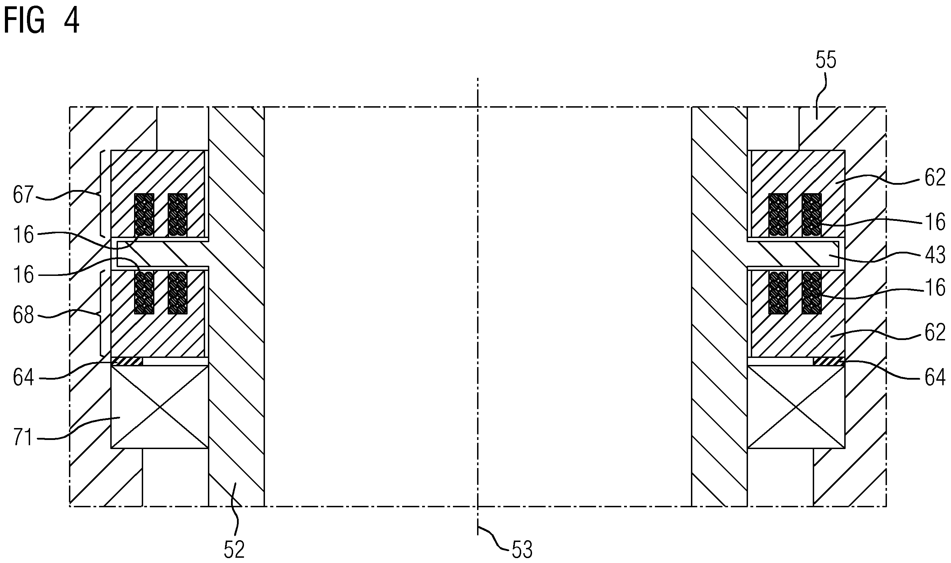

Die Darstellung nach Figur 4 zeigt als Azimutlager 61 ein axiales Magnetlager wie aus Figur 2 bekannt und ein radiales Wälzlager 71. Das radiale Magnetlager 63 aus Figur 2 ist in Figur 4 durch das mechanische Lager 71 ersetzt.

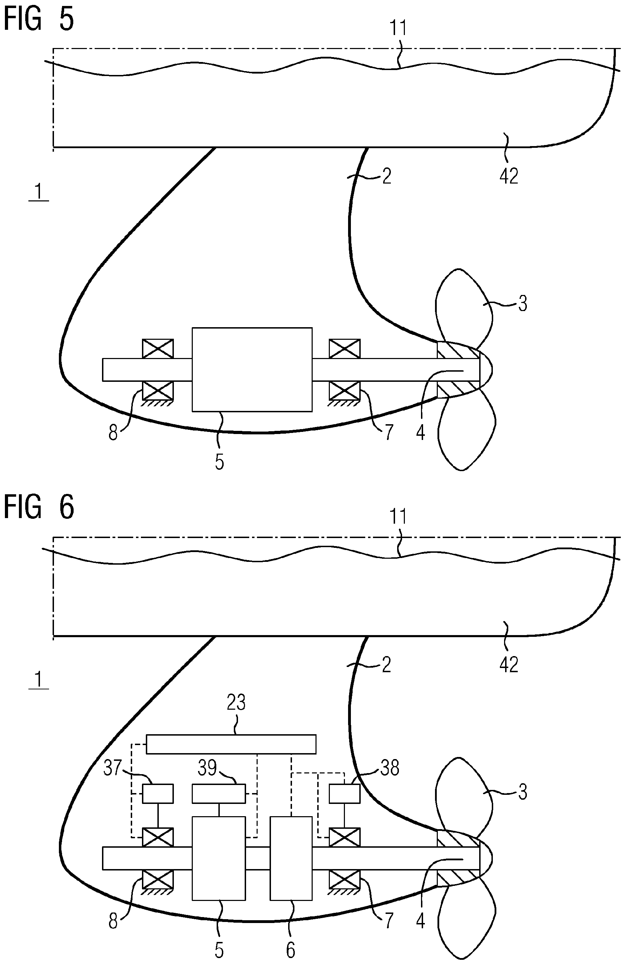

Die Darstellung nach Figur 5 zeigt in vereinfachter und schematischer Darstellung eine Fahrmaschine für ein Gewässer 1 mit einem Schiffsrumpf 42 und angedeuteter Wasserlinie 11. Die Fahrmaschine für ein Gewässer 1 weist einen Gondelantrieb auf. In einem Gehäuse 2 des Gondelantriebes befindet sich eine elektrische Maschine, mittels derer über eine Welle 4 ein Propeller 3 antreibbar ist. Die Welle 4 ist durch ein antriebsseitiges Lager 7 und ein bedienseitiges Lager 8 innerhalb des Gehäuses 2 gelagert. Das antriebsseitige Lager 7 und oder das bedienseitige Lager 8 sind als Magnetlager ausgeführt. Durch den Einsatz von Magnetlagern können Reibungsverluste reduziert werden.

Die Darstellung nach Figur 6 zeigt eine Fahrmaschine für ein Gewässer 1 ähnlich der nach Figur 5. Die Fahrmaschine für ein Gewässer 1 weist zwischen der elektrischen Maschine 5 und dem Propeller 3 ein Getriebe 6 auf. Das antriebsseitige magnetische Lager 7 wird über einen Stromrichter 38 gespeist. Das bedienseitige magnetische Lager 8 wird über einen Stromrichter 37 gespeist. Die elektrische Maschine 5 wird über einen Stromrichter 39 gespeist. Zur Kühlung elektrischer Betriebsmittel wie z.B. Stromrichter ist eine Kühleinrichtung 23 vorgesehen. Mittels der Kühleinrichtung 23 lassen sich die Lager 7 und 8, die Stromrichter 37, 38 und 39 sowie die elektrische Maschine 5 kühlen, was durch gestrichelte Linien angedeutet ist. Zusätzlich kann auch das Getriebe mittels der Kühleinrichtung 23 gekühlt werden.

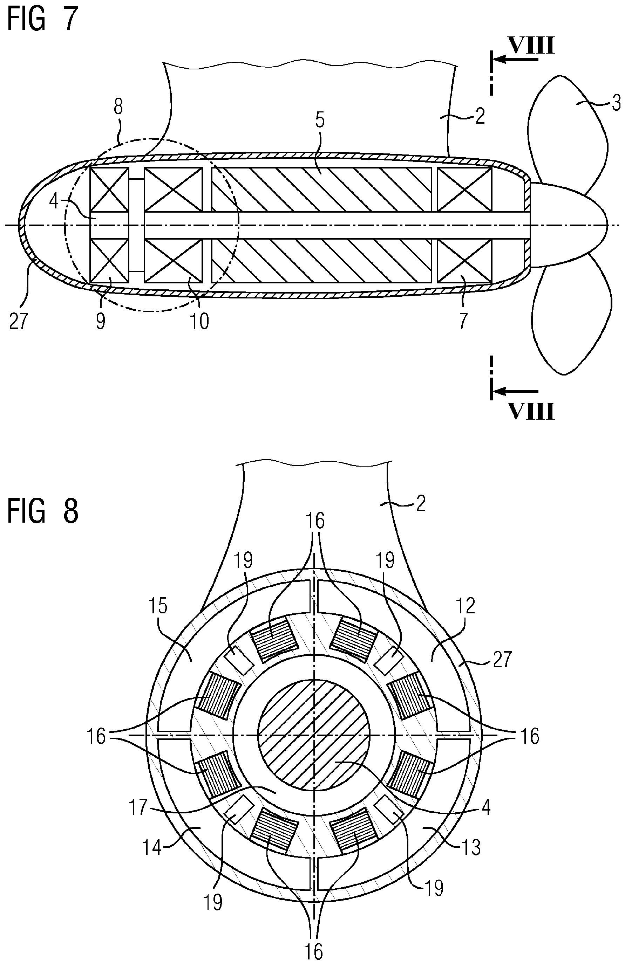

Die Darstellung nach Figur 7 zeigt eine Fahrmaschine für ein Gewässer mit drei Lager 7, 9 und 10 zur Lagerung einer Welle 4. Die bedienseitige Lagerung der Welle ergibt sich durch die Lager 9 und 10. Alle Lager 7, 9 und 10, sowie die elektrische Maschine 5 befinden sich innerhalb eines Antriebsgehäuses 27 des Gondelantriebs, wobei das Gehäuse 2 des Gondelantriebs auch das Antriebsgehäuse 27 umfasst. Das Antriebsgehäuse 27 ist über einen Schaft am Rumpf eines Schiffes (in dieser Figur nicht dargestellt) angebracht. Bedienseitig sind ein erstes Lager 9 und ein zweites Lager 10 vorgesehen, wobei das erste Lager 9 zur Aufnahme von axialen Kräften vorgesehen ist und das zweite Lager 10 zur Aufnahme von radialen Kräften vorgesehen ist.

Die Darstellung nach Figur 8 zeigt einen Querschnitt durch den Gondel nach Figur 7. Durch den Querschnitt wird der Aufbau des Magnetlagers 7 verdeutlicht. Das Magnetlager 7 weist ein erstes Magnetlagersegment 12, ein zweites Magnetlagersegment 13, ein drittes Magnetlagersegment 14 und ein viertes Magnetlagersegment 15 auf. Die vier Magnetlagersegmente 12 bis 15 sind kreisförmig angeordnet. Die Magnetlagersegmente 12 bis 15 weisen Magnetlagerspulen 16 zur Erzeugung eines magnetischen Feldes auf. Ein Magnetlager kann auch mehr bzw. weniger als 4 Segmente aufweisen, wobei dies in Figur 8 nicht dargestellt ist. Zur Regelung und/oder Steuerung sind Sensoren 19 einsetzbar. Im Bereich der Sensoren 19 können zur Kühlung der Spulen auch Kühlkanäle vorgesehen sein.

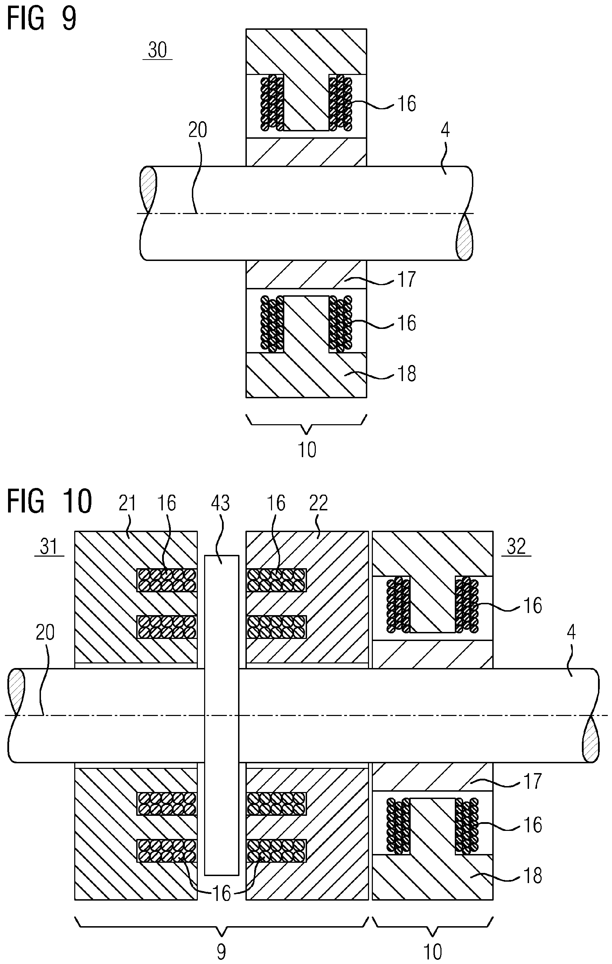

Die Darstellung nach Figur 9 zeigt schematisch das zweite Lager 10 gemäß Figur 7 ausgeführt als Magnetlager 30. Das Magnetlager 9 weist als Radial-Magnetlager ein Passivteil 17 und ein Aktivteil 18 auf. Das Passivteil 17 sitzt auf der Welle 4, welche eine Achse 20 hat. Das Aktivteil 18 weist die Magnetlagerspule 16 auf.

Die Darstellung nach Figur 10 zeigt schematisch das erste Lager 9 und das zweite Lager 10 gemäß Figur 7. Zwischen dem ersten Lager 9 und dem zweiten Lager 10 kann sich ein Zwischenring befinden, welcher in der Figur 10 jedoch nicht dargestellt ist. Beide Lager sind als Magnetlager 31 und 32 ausgeführt und bilden ein Radial-Axial-Magnetlager. Das Magnetlager 32 entspricht dem Magnetlager 30 aus Figur 9. Das Magnetlager 31 ist auf der Welle 4 positioniert und weist ein erstes Aktivteil 21 und ein zweites Aktivteil 22 auf. Diese Aktivteile 21 und 22 weisen Magnetlagerspulen 16 auf und stehen in Wirkbeziehung zum Passivteil 43 des Magnetlagers 31.

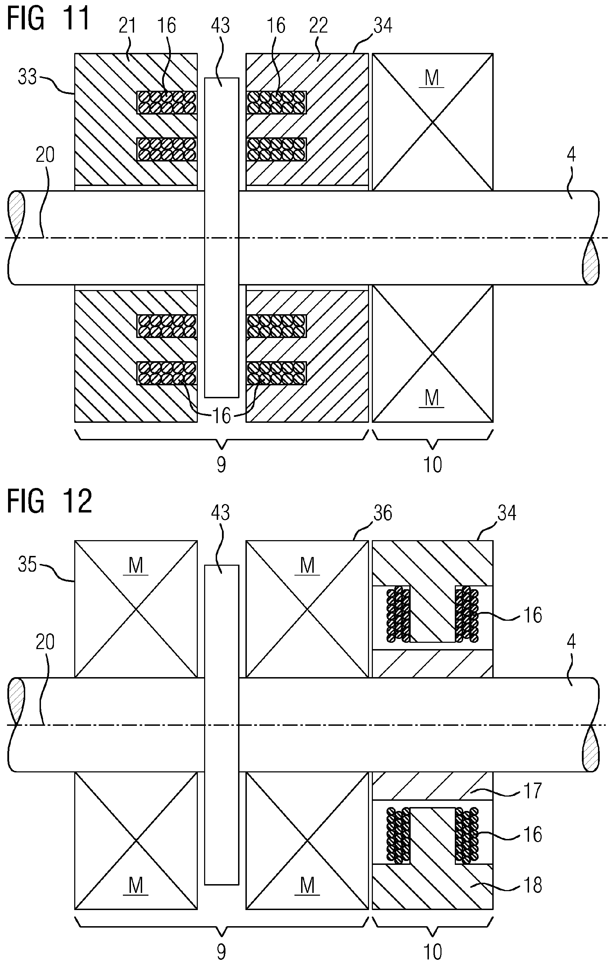

Die Darstellung nach Figur 11 zeigt schematisch das erste Lager 9 und das zweite Lager 10 gemäß Figur 7, wobei im Unterschied zu Figur 10 das zweite Lager 10 nach Figur 11 ein mechanisches Lager ist (z.B. ein Wälzlager), was durch ein "M" symbolisiert ist. Der Aufbau nach Figur 11 zeigt also ein Axial-Magnetlager und beispielsweise ein Radial-Wälzlager.

Die Darstellung nach Figur 12 zeigt schematisch das erste Lager 9 und das zweite Lager 10 gemäß Figur 7, wobei im Unterschied zu Figur 10 das erste Lager 10 nach Figur 12 ein mechanisches Lager ist (z.B. ein Wälzlager). Das Element 43 kann entweder entfallen (hier nicht dargestellt) oder beispielsweise als Positionierhilfe für die mechanischen Lager 35 und 36 dienen, welche insbesondere zur Aufnahme axialer Kräfte vorgesehen sind. Der Aufbau nach Figur 12 zeigt also beispielsweise Axial-Wälzlager und ein Radial-Magnetlager.

## Patentansprüche

1. Fahrmaschine für ein Gewässer (1) mit einem Antriebsgehäuse (27), wobei das Antriebsgehäuse (27) mittels eines zumindest ein Magnetlager (62,69,70) aufweisenden Azimutlagers (61) azimutal drehbar gelagert ist, wobei die Azimutlagerung (61) ein axiales Lager (62,65,66) und ein radiales Lager (63,69,70,71) aufweist, wobei das axiale Lager (62,65,66) das Magnetlager (62) ist und/oder wobei das radiale Lager (63,69,70,71) das Magnetlager (69,70) ist, wobei ein Abstandselement (64) das axiale Lager (62,65,66) vom radialen Lager (63,69,70,71) beabstandet, wobei das Abstandselement elektrisch isoliert.

2. Fahrmaschine für ein Gewässer (1) nach Anspruch 1, wobei ein Pod-Antrieb das Antriebsgehäuse (27) und einen Propeller (3) aufweist und wobei die Lagerung eine Azimutlagerung (61) ist.

3. Fahrmaschine für ein Gewässer (1) nach Anspruch 1 oder 2, wobei das radiale Lager (71) ein Wälzlager (71) ist.

4. Fahrmaschine für ein Gewässer (1) nach einem der Ansprüche 1 bis 3, wobei das axiale Lager (65,66) zumindest ein Wälzlager (65,66) aufweist.

5. Fahrmaschine für ein Gewässer (1) nach einem der Ansprüche 1 bis 4, wobei der Propeller (3) mit einer Welle (4) gekoppelt ist, wobei die Welle (4) insbesondere innerhalb des Antriebsgehäuses (27) gelagert ist, wobei ein Lager (7,8) zur Lagerung der Welle (4) ein Magnetlager (30,31,32,33,34) ist.

6. Fahrmaschine für ein Gewässer (1) nach Anspruch 5, wobei diese zur Lagerung der Welle (4) das Magnetlager (30,31,32, 33,34) der Welle und ein mechanisches Lager (35) aufweist.

7. Fahrmaschine für ein Gewässer (1) nach Anspruch 5 oder 6, welche zur Lagerung der Welle (4) ein erstes Lager (9) und ein zweites Lager (10) aufweist.

8. Fahrmaschine für ein Gewässer (1) nach Anspruch 7, wobei das erste Lager (9) Axialkräfte aufnimmt.

9. Fahrmaschine für ein Gewässer (1) nach Anspruch 7 oder 8, wobei das zweite Lager (10) Radialkräfte aufnimmt.

10. Fahrmaschine für ein Gewässer (1) nach einem der Ansprüche 5 bis 9, wobei ein Getriebe (6) mittels zumindest eines Magnetlagers (30,31,32,33,34) gelagert ist.

11. Fahrmaschine für ein Gewässer (1) nach einem der Ansprüche 5 bis 10, wobei die Welle (4) mit einer elektrischen Maschine (11) gekoppelt ist.

12. Fahrmaschine für ein Gewässer (1) nach Anspruch 11, wobei das Getriebe (6) mit der elektrischen Maschine (11) gekoppelt ist.

13. Fahrmaschine für ein Gewässer (1) nach einem der Ansprüche 1 bis 12, wobei das Magnetlager (30,31,32,33,34,61) und/oder ein Stromrichter (24,25,26,56) des Magnetlagers gekühlt ist.

14. Fahrmaschine für ein Gewässer (1) nach Anspruch 13, wobei die Kühlung des Magnetlagers (30,31,32,33,34,61) und/oder ein Stromrichter (24,25,26) des Magnetlagers thermisch mit der Kühlung der elektrischen Maschine (11) und/oder mit der Kühlung des Stromrichters (24,25,26,56) insbesondere für die elektrische Maschine (11) gekoppelt ist.

## Claims

1. Propulsion machine for a body of water (1) having a drive housing (27), wherein the drive housing (27) is mounted in an azimuthally rotatable manner by means of an azimuth bearing (61) having at least one magnetic bearing (62, 69, 70), wherein the azimuth bearing (61) has an axial bearing (62, 65, 66) and a radial bearing (63, 69, 70, 71), wherein the axial bearing (62, 65, 66) is tshe magnetic bearing (62) and/or wherein the radial bearing (63, 69, 70, 71) is the magnetic bearing (69, 70), wherein a spacing element (64) spaces the axial bearing (62, 65, 66) apart from the radial bearing (63, 69, 70, 71), wherein the spacing element insulates electrically.

2. Propulsion machine for a body of water (1) according to claim 1, wherein a pod drive has the drive housing (27) and a propeller (3) and wherein the bearing is an azimuth bearing (61) .

3. Propulsion machine for a body of water (1) according to claim 1 or 2, wherein the radial bearing (71) is a roller bearing (71).

4. Propulsion machine for a body of water (1) according to one of claims 1 to 3, wherein the axial bearing (65, 66) has at least one roller bearing (65, 66).

5. Propulsion machine for a body of water (1) according to one of claims 1 to 4, wherein the propeller (3) is coupled to a shaft (4), wherein the shaft (4) is mounted in particular within the drive housing (27), wherein a bearing (7, 8) for mounting the shaft (4) is a magnetic bearing (30, 31, 32, 33, 34) .

6. Propulsion machine for a body of water (1) according to claim 5, wherein for mounting the shaft (4) the machine has the magnetic bearing (30, 31, 32, 33, 34) of the shaft and a mechanical bearing (35).

7. Propulsion machine for a body of water (1) according to claim 5 or 6, which has a first bearing (9) and a second bearing (10) for mounting the shaft (4).

8. Propulsion machine for a body of water (1) according to claim 7, wherein the first bearing (9) absorbs axial forces.

9. Propulsion machine for a body of water (1) according to claim 7 or 8, wherein the second bearing (10) absorbs radial forces.

10. Propulsion machine for a body of water (1) according to one of claims 5 to 9, wherein a gearing (6) is mounted by means of at least one magnetic bearing (30, 31, 32, 33, 34).

11. Propulsion machine for a body of water (1) according to one of claims 5 to 10, wherein the shaft (4) is coupled to an electrical machine (11).

12. Propulsion machine for a body of water (1) according to claim 11, wherein the gearing (6) is coupled to the electrical machine (11).

13. Propulsion machine for a body of water (1) according to one of claims 1 to 12, wherein the magnetic bearing (30, 31, 32, 33, 34, 61) and/or a current converter (24, 25, 26, 56) of the magnetic bearing is cooled.

14. Propulsion machine for a body of water (1) according to claim 13, wherein the cooling of the magnetic bearing (30, 31, 32, 33, 34, 61) and/or a current converter (24, 25, 26) of the magnetic bearing is/are thermally coupled to the cooling of the electrical machine (11) and/or to the cooling of the current converter (24, 25, 26, 56), in particular for the electrical machine (11).

## Revendications

1. Machine propulsive pour une pièce (1) d'eau, comprenant un carter (27) d'entraînement, le carter (27) d'entraînement étant monté tournant azimutalement au moyen d'un montage azimutal ayant au moins un palier (62, 69, 70) magnétique, le montage (61) azimutal ayant un palier (62, 65, 66) axial et un palier (63, 69, 70, 71) radial, le palier (62, 65, 66) axial étant le palier (62) magnétique et/ou le palier (63, 69, 70, 71) radial étant le palier (69, 70) magnétique, un élément (64) de mise à distance mettant le palier (62, 65, 66) axial à distance du palier (63, 69, 70, 71) radial, l'élément de mise à distance étant isolé électriquement.

2. Machine propulsive pour une pièce (1) d'eau suivant la revendication 1, dans laquelle un entraînement de nacelle a le carter (27) d'entraînement et une hélice (3) et dans laquelle le montage est un montage (61) azimutal.

3. Machine propulsive pour une pièce (1) d'eau suivant la revendication 1 ou 2, dans laquelle le palier (71) radial est un palier (71) à roulement.

4. Machine propulsive pour une pièce (1) d'eau suivant l'une des revendications 1 à 3, dans laquelle le palier (65, 66) axial a au moins un palier (65, 66) à roulement.

5. Machine propulsive pour une pièce (1) d'eau suivant l'une des revendications 1 à 4, dans laquelle l'hélice (3) est accouplée à un arbre (4), l'arbre (4) étant monté notamment à l'intérieur du carter (7) d'entraînement, un palier (7, 8) de montage de l'arbre (4) étant un palier (30, 31, 32, 33, 34) magnétique.

6. Machine propulsive pour une pièce (1) d'eau suivant la revendication 5, dans laquelle celle-ci a, pour le montage de l'arbre (4), le palier (30, 31, 32, 33, 34) magnétique de l'arbre et un palier (35) mécanique.

7. Machine propulsive pour une pièce (1) d'eau suivant la revendication 5 ou 6, qui a, pour le montage de l'arbre (4) un premier palier (9) et un deuxième palier (10).

8. Machine propulsive pour une pièce (1) d'eau suivant la revendication 7, dans laquelle le premier palier absorbe des forces axiales.

9. Machine propulsive pour une pièce (1) d'eau suivant la revendication 7 ou 8, dans laquelle le deuxième palier (10) absorbe des forces radiales.

10. Machine propulsive pour une pièce (1) d'eau suivant l'une des revendications 5 à 9, dans laquelle une transmission (6) est montée au moyen d'au moins un palier (30, 31, 32, 33, 34) magnétique.

11. Machine propulsive pour une pièce (1) d'eau suivant l'une des revendications 5 à 10, dans laquelle l'arbre (4) est accouplé à une machine (11) électrique.

12. Machine propulsive pour une pièce (1) d'eau suivant la revendication 11, dans laquelle la transmission (6) est accouplée à la machine (11) électrique.

13. Machine propulsive pour une pièce (1) d'eau suivant l'une des revendications 1 à 12, dans laquelle le palier (30, 31, 32, 33, 34, 61) magnétique et/ou un convertisseur (24, 25, 26, 56) du palier magnétique est refroidi.

14. Machine propulsive pour une pièce (1) d'eau suivant la revendication 13, dans laquelle le refroidissement du palier (30, 31, 32, 33, 34, 61) magnétique et/ou un convertisseur (24, 25, 26) du palier magnétique est couplé thermiquement au refroidissement de la machine (11) électrique et/ou au refroidissement du convertisseur (24, 25, 26, 56), notamment pour la machine (11) électrique.
